# EUROPÄISCHE PATENTSCHRIFT

(11) **EP 1 381 925 B1**
(45) Veröffentlichungstag und Bekanntmachung des Hinweises auf die Patenterteilung: **31.08.2005**
(21) Anmeldenummer: 02712712.5
(22) Anmeldetag: 19.04.2002
(51) Int. Cl.: G05B 19/414, B25J 9/04

(54) **KNICKARMROBOTER**
BUCKLING ARM ROBOT
ROBOT A BRAS ARTICULE

(30) Priorität: 22.04.2001 CH 731012001
(43) Veröffentlichungstag der Anmeldung: 21.01.2004
(73) Patentinhaber: Neuronics AG, CH-8005 Zürich (CH)
(72) Erfinder: FRUEH, Hansruedi, CH-8355 Aadorf (CH); BRETSCHER, Thomas, CH-8406 Winterthur (CH); GFELLER, Christian, CH-8002 Zürich (CH)
(74) Vertreter: Becker, Konrad
(86) Internationale Anmeldenummer: PCT/CH2002/000216
(87) Internationale Veröffentlichungsnummer: WO 2002/086637

(56) Entgegenhaltungen:
- DE-A- 19 521 833
- US-A- 4 518 308
- US-A- 4 990 839
- US-A- 5 219 264
- US-A- 6 084 373

## Beschreibung

Die Erfindung betrifft einen Knickarmroboter gemäss Patentanspruch 1.

Mobile Roboter nehmen heute einen immer grösseren Raum ein. Für deren praktische Nützlichkeit fehlen aber meist Manipulatoren (z.B. [1]: Moeller et al., 1998) oder diese sind nur für spezifische Anwendungen brauchbar ([2]: Topping and Smith, 2000). Die Kombination von industriellen Roboterarmen und mobilen Plattformen ist auch kaum möglich, da die Voraussetzungen an Befestigung, Energieversorgung, Computerleistung und Raumbeanspruchung auseinanderklaffen. [3]: Onori et al. (2000) beschreiben ein hyperflexibles automatisches Montiersystem. Das Konzept sieht den Übergang von der manuellen Montage zur automatischen so vor, dass nach und nach Arbeitsschritte mit kleinen flexiblen Einheiten automatisiert werden. Dabei wird die Ko-Existenz von manuellen und automatischen Operationen hervorgehoben. Es wird vorgeschlagen, das jeweilige Automatisierungssystem aus verschiedenen standardisierten Komponenten zusammenzubauen. Dieses Prinzip hat sich aber aus Gründen der Standardisierungs-Prozedere bis heute nicht durchsetzen können.
[1] Moeller, R., Lambrinos, D., Pfeifer, R., Wehner, R. (1998): Insect strategies of visual homing in mobile robots. Proc. Computer Vision and Mobile Robotics Workshop, CVMR'98, 37-45, FORTH, Heraklion, Greece, 1998.
[2] Mike Topping, Jane Smith (2000): Hand 1 - A Rehabilitation Robotic System for the Severely Disabled. Proceedings of the 31st International Symposium on Robotics, May 14-17, 2000, Montreal, Canada; pp. 254-257.
[3] Onori, M., Alsterman, H., Bergdahl, A., Johansson, R. (2000): Hyper Flexible Automatic Assembly, Needs and Possibilities with Standards Assembly Solutions. Proceedings of the 31st International Symposium on Robotics, May 14-17, 2000, Montreal, Canada; pp. 265-270.

Im US-Patent Nr. 4,641,251 wird ein Mechanismus zum Schutz vor unvorgesehenen Hindernissen beschrieben. Dazu wird ein Nebenkontrollsystem verwendet, das Armsensoren und -Bewegungen registriert, die von den programmierten Bewegungen bzw. erwarteten Sensorsignalen abweicht. Das System kann gegen verschiedenste Arten von Beeinträchtigungen eingesetzt werden.

Nach EP0616874 ist ein flexibler Roboterarm bekannt, der für einen portablen Roboter mit Bewegungen auf/ab sowie zwei senkrecht zu einander stehenden horizontalen Richtungen ausgelegt ist. Dieser Arm ist für eine mobile Plattform konzipiert. Dieser Roboter ist für grosse Lasten eines spezifischen Industriebereiches konzipiert. Nachteilig ist dessen Schwere und der Mangel für einen vielseitigen Einsatz.

Nach US-Patent Nr. 4,986,723 ist ein antropomorphischer Roboterarm bekannt, mit Hand, Handgelenk und Arm. Die Hand enthält eine Basisplatte, mehrere flexible Finger mit je mehreren Gelenken, einem oppositen Daumen, der in einer Richtung rotieren kann. Aktuatoren innerhalb des Armes treiben jeden Freiheitsgrad unabhängig an, sodass dieselben Bewegungen wie bei einem menschlichen Arm möglich sind.

Weiter wird in US-Patent Nr. 4,737,697 eine Teaching-Methode für industrielle Roboter beschrieben. Ein Positionsencoder generiert ein Signal, das die aktuelle Position des Arms anzeigt, wogegen ein manuell kontrolliertes Positionssystem die anzunehmenden Positionen speichert. Ein Servo-Kontrollsystem antwortet auf die Signale, so dass die aktuelle Position des Armes die gewünschte Position während des Playbacks anfährt. Der Arm kann während des Trainings manuell zur gewünschten Position bewegt werden.

Nach CN1,225,523 ist ein Miniaturroboter für medizinische Anwendungen bekannt. Dieser zeigt die grossen Fortschritte in der Miniaturisierung der Roboter, und wie diese so gebaut werden können, dass der potentiell vom Roboter verursachte Schaden minimal bleibt.

Nach US-Patent Nr. 4,990,839 ist ein modulares Robotersystem bekannt, bei dem mehrere Roboterarme, mit aktiven und passiven Elementen, durch einen zentralen Prozessor gesteuert werden. Jedes aktive Teil jedes Armes enthält einen integrierten Mikroprozessor, der mit dem zentralen Prozessor verbunden ist. Die individuellen Ortsverschiebungen der aktiven Teile resultieren in der gewünschten Position des Endeffektors (im Allgemeinen des Greifwerkzeuges).

In DE 195 21 833 A wird ein Handhabungsgerät für zu demontierende Alt-Kraftfahrzeuge beschrieben. Ein neigungsverstellbarer Ausleger weist an seinem freien Ende eine schwenkbare Aufnahmevorrichtung auf. Der Ausleger ist als Gelenkarm mit mindestens zwei hintereinander angelenkten Trägern ausgebildet, von denen der innere mit der Säule gelenkig verbunden ist und der äussere die Aufnahmevorrichtung trägt. Der innere Träger ist teleskopierbar und verfügt über mindestens zwei Teleskopabschhitte.

Nach US-A-5,219,264 ist ein mehrachsiger Roboterarm bekannt, der sich auf einem mobilen System befindet und mit einem Greifer mit integrierter Kamera versehen ist. Der Roboterarm findet das Objekt oder den Zielbereich durch zwei lichtaussendende Dioden, die auf einer bekannten Distanz und Orientierung zum Objekt bzw. dem Zielbereich stehen. Roboterarm und Kamera werden von einem Onboard-Computer gesteuert, um den Einsatz in einer Fabrikationsanlage zu ermöglichen.

Rainer Bischoff beschreibt den Entwurf und die Konstruktion eines anthropomorphen Roboters (13. Fachgespräch Autonome Mobile Systeme, Seiten 1-12, AMS, Stuttgart, Oktober 1997). Ein sich autonom fortbewegendes Robotersystem, das durch seinen menschenähnlichen Aufbau, die Sensorik (inkl. Kamera) und Aktorik sowie seine handlungsbezogene Intelligenz zu Handhabungsaufgaben befähigt ist, wie sie für viele Bereiche der Servicerobotik erforderlich sind. Dabei wird auf einen streng modularen Aufbau des Roboters besonderen Wert gelegt, um nahezu beliebige Konfigurationen und Komplexitäten mittels Kombinatorik realisieren zu können.

Ernest L. Hall (Intelligent Robot Trends and Predictions for the First Year of the New Millenium, Proceedings of the SPIE - the International Society for Optical Engineering, 2000, USA) legt dar, dass intelligente Systeme für die künftigen Anforderungen an die Robotik eine Notwendigkeit darstellen, und dass diese das Potenzial haben, "die Welt zu verändern". Insbesondere in Kombination mit Manipulatoren, Sensoren und Kontrollern ist erweiterte Intelligenz nützlich. Auf die Mechatronik wird dabei grossen Wert gelegt, da diese wesentlich zur Intelligenz des Gesamtsystems beiträgt.

Von Mitsubishi Electric ist ein fünfachsiger Knickarmroboter bekannt, der mit wenig Platzbedart bei einer Reichweite von 410 mm hochpräzise und mit Geschwindigkeiten von über 2 m/s arbeitet. Das neue Controller-Konzept bietet hohe Leistung aufgrund einer 64 Bit CPU. Neben der pneumatischen Greiflösung ist auch die Adaptierung einer elektrischen Hand vorgesehen (Roboterarm RV-2AJ, Mitsubishi Electric, Seiten 1-2, www.mitsubishi-automation.de/produkte/rob05_presse.html; "Kleiner Roboter ganz gross", Mitsubishi Electric 09.03.2001, http://www.pfi-ps.de/aktuell/innovationen/2001-1 /0308mitsubishi.htm).

Das Deutsche Luft- und Raumfahrtzentrum (DLR) hat einen Roboterarm mit optimiertem Eigengewicht/Nutzlast-Verhältnis entwickelt. Jede Achse enthält integrierte Elektronik, die via Glasfaseroptik mit dem Hauptkontroller kommunizieren. Jedes Gelenk enthält Drehmoment-Sensoren, die erlauben, den Arm von Hand zu bewegen und um die Vibrationen zu kompensieren, die aufgrund der reduzierten Steifigkeit auftreten (Report on Hannover Fair 20-25 March 2000, http://trueforce.com/News/Hannover2000_Report.htm).

Nachteile dieser Systeme sind, dass:
a) das Zusammenwirken von Mensch und Roboter zur Leistung einer Arbeit noch sehr schlecht funktioniert, aus gegenseitigen Sicherheitsgründen,
b) die Knickarm-Roboter, die industrielle Handlingsaufgaben übernehmen, zu schwer sind um auf mittelgrossen bis kleinen beweglichen Systemen montiert zu werden,
c) die Leistungselektronik in einem separaten Kasten untergebracht ist, der selbst durch seine grosse Dimensionen und sein Gewicht den mobilen Einsatz des Roboters einschränkt,
d) die Roboter die Rechenleistung auf einer zentralen Einheit ausführen und dadurch keine 'lokale Intelligenz' im Bereich der Aktuatoren und Sensoren vorhanden ist, was unnötig lange Verkabelungen erfordert, und die Möglichkeiten der Lernfähigkeit der Roboter einschränkt,
e) kein Knickarmroboter verfügbar ist, der sowohl industrielle Anforderungen erfüllt als auch für Aufgaben im Heimbereich sowie im Dienstleistungssektor auf einfache Art eingesetzt werden kann,
f) die Arbeitsmittel der Roboter nicht über eine Sensorik verfügen, die die Ausführung einer Aufgabe bei unterschiedlichen Situationen und Bedingungen erlaubt, und
g) das Verhältnis Eigengewicht zu maximaler Nutzlast zu hoch ist.

Es ist die Aufgabe der vorliegenden Erfindung, einen Knickarmroboter vorzuschlagen, der Mittel zum Schutz von Mensch und Maschine vor übermässiger Krafteinwirkung aufweist.

Erfindungsgemäss wird diese Aufgabe mit einem Knickarmroboter gemäss dem Wortlaut nach Patentanspruch 1 gelöst.

Die Erfindung wird im Folgenden anhand der Zeichnung näher erläutert. Es zeigen:
- Fig. 1: Basisaufbau eines Knickarmroboters in schematischer Darstellung
- Fig. 2: Aufbau und Anordnung der Antriebsmittel
- Fig. 3A-3B: Greiferarm mit drehbar-gelagertem Passiv-Gelenk

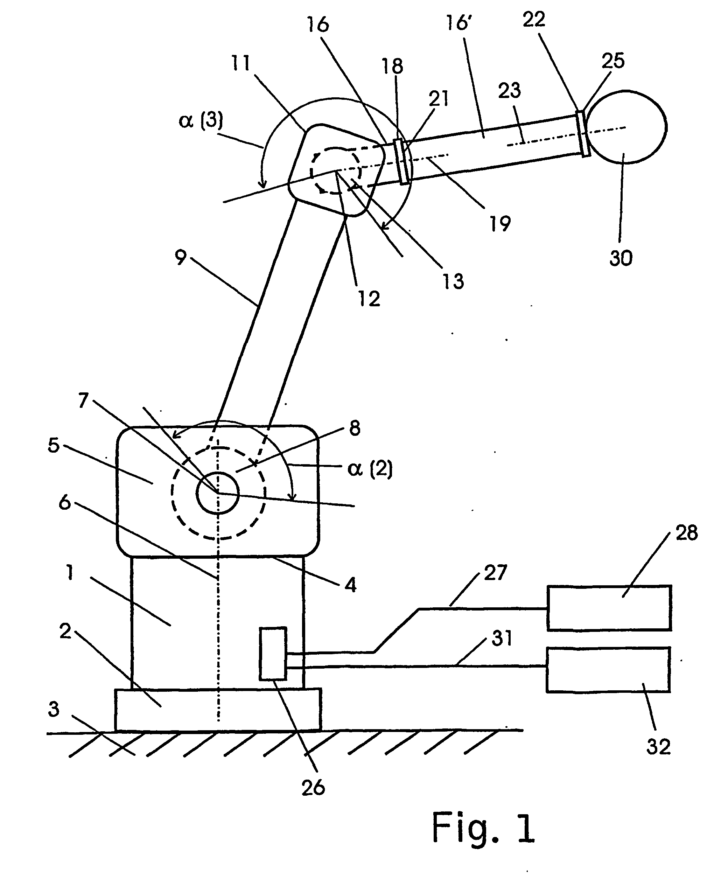

Fig. 1 zeigt den Basisaufbau eines Knickarmroboters in schematischer Darstellung. Ein Basiselement 1 weist auf seiner unteren Seite ein Befestigungselement 2 auf, über welches dieses auf einer Grundplatte 3 befestigt wird. Die obere Seite des Basiselementes weist eine horizontale Fläche 4 auf, auf der ein Gelenkblock 5 bündig aufliegt und drehbar um eine Achse 6 gelagert ist. Der Gelenkblock 5 und das Basiselement definieren einen ersten Freiheitsgrad für eine Bewegung um die Achse 6 mit einem Drehwinkel α(1) (nicht dargestellt) von etwa 360°.
Die Achse verläuft im Wesentlichen im Zentrum von Basiselement 1 und Gelenkblock 5. Im oberen Teil des Gelenkblockes 5 liegt eine zweite Achse 7 senkrecht zur Achse 6 angeordnet. Um diese zweite Achse 7 bewegt sich ein Gelenk 8, das von einem zylindrischen Trägerrohr 9, auch 'Oberarm' genannt, umgeben und mit diesem fest verbunden ist. Das Trägerrohr 9 und der Gelenkblock 5 definieren einen zweiten Freiheitsgrad für eine Bewegung von ca. 150° um die Achse 7, was mit dem Drehwinkel α(2) angedeutet ist. Am anderen Ende des Trägerrohres 9 ist ein zweiter Gelenkblock 11 angebracht, durch dessen Zentrum eine dritte Achse 12 parallel zur zweiten Achse 7 verläuft.
Um diese dritte Achse 12 bewegt sich ein Gelenk 13, das von einem zylindrischen Trägerrohr 16, auch 'Vorderarm' genannt, umgeben und mit diesem fest verbunden ist. Das Trägerrohr 16 und der zweite Gelenkblock 11 definieren einen dritten Freiheitsgrad für eine Bewegung von ca. 240° um die Achse 12, was mit dem Drehwinkel α(3) angedeutet ist.
Das Trägerrohr 16 weist nahe dem zweiten Gelenkblock 11 liegend einen flanschförmigen und senkrecht zur Trägerrohrachse liegenden Abschluss 18 auf, durch dessen Zentrum eine vierte Achse 19 parallel zur Trägerrohrachse verläuft.
Die dem Gelenk 13 abgekehrte Seite des Abschlusses 18 weist eine plane Fläche 21 auf, auf der ein Teil 16' des Trägerrohres 16 bündig aufliegt und drehbar um die vierte Achse 19 gelagert ist. Der Teil 16' des Trägerrohres 16 und das Trägerrohr 16 definieren einen vierten Freiheitsgrad für eine Bewegung von etwa 240° um die Achse 19, wodurch ein Drehwinkel α(4) (nicht dargestellt) gebildet wird.
Am anderen Ende des Trägerrohres 16' ist ein Flansch 22 angebracht, durch dessen Zentrum eine fünfte Achse 23 parallel zur vierten Achse 19 verläuft.

Die dem Trägerrohr 16' abgekehrte Seite des Flansches 22 weist eine plane Fläche 25 auf, auf der Arbeitsmittel 30 oder weitere Freiheitsgrade 5 bis 7 mit deren Arbeitsmitteln bündig aufliegen und drehbar um die fünfte Achse 23 gelagert, bzw. angeordnet sind.
Basiselement, Trägerrohre, Gefenkblöcke und Arbeitsmittel sind als Fräs- und Drehteile gefertigt und daher einfach zerlegbar, austauschbar und anwendungsspezifisch anpassbar.
Am Basiselement 1 ist eine äussere Schnittstelle 26 für die serielle Datenübertragung inkl. Stromversorgung angebracht. Von dieser Schnittstelle führt ein Verbindungskabel 27 zu Mitteln der Stromversorgung 28 und ein zweites Verbindungskabel 31 zu Mitteln externer Rechnerleistung 32.

Als Arbeitsmittel 30 sind Greifer und andere Werkzeuge zu verstehen, die zur Problemlösung erforderlich sind. Die Form und die zusätzliche Anzahl Freiheitsgrade hängen von der zu lösenden Aufgabe ab. Das Vorhandensein von mehreren Sensoren an entscheidenden Positionen erlaubt die Zentrierung der zu manipulierenden Objekte, deren Erkennung und Kategorisierung.

Als Sensoren gelangen IR-Sensoren, lokale Kraftsensoren, Leitfähigkeitssensoren, Dehnungssensoren, Ultraschallsensoren, Laser und eine Miniaturkamera zur Anwendung. Beim Vorliegen von Sensoren verschiedener Modalität, wird eine Sensor-Redundanz gebildet, welche die Lernfähigkeit erhöht.

Als Mittel der Stromversorgung 28 ist eine 12 V-Stromversorgung oder ein 12 V-Akku vorgesehen. Mit einem 12 V-Akku wird auch der Einsatz als mobiler Roboter möglich.

Als Mittel externer Rechnerleistung 32 ist ein PC, ein Laptop oder ein Prozessor eines anderen Roboters vorgesehen, die alle über eine hohe Rechnerleistung verfügen. Damit können mehrere aufwendige Algorithmen aus den Bereichen der künstlichen Intelligenz (Lernen durch neuronale Netzwerke, genetische Algorithmen, Tabu Search), Kinematik u.a.m. parallel laufen und online die Werte in den Prozessoren der Mikrokontroller ändern. Die Firmware auf dem Knickarmroboter ermöglicht die Online-Modifikation aller für die Vor- und Hauptsteuerung verwendeten Parameter; der Knickarmroboter ist damit lernfähig. Die Software verfügt über eine interne Datenbank und die Möglichkeit lernfähige Algorithmen zu betreiben.

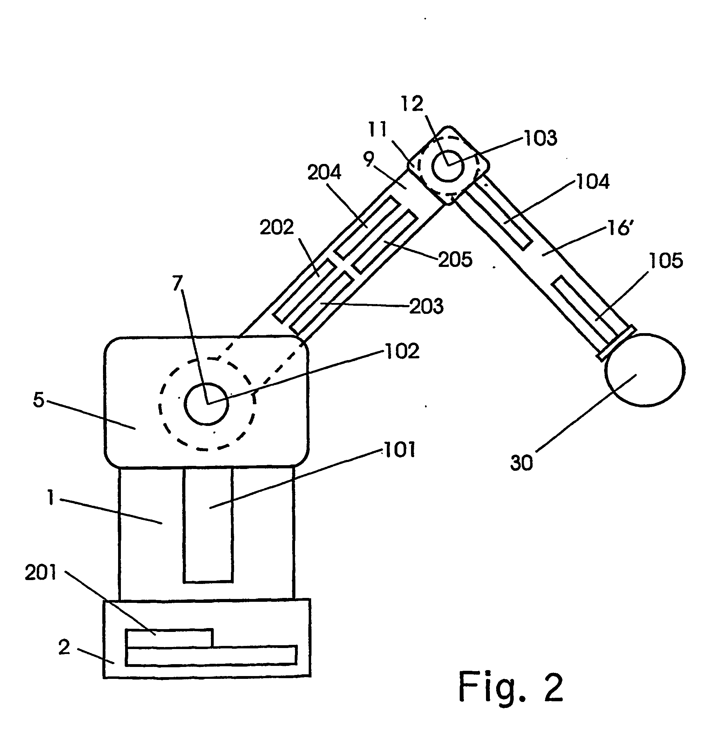

Fig. 2 zeigt den Aufbau und die Anordnung der Antriebsmittel. Zu mechanischen Antriebsmitteln zählen fünf Motor-Getriebe-Einheiten 101, 102, 103, 104 und 105, von denen sich ein erstes im Basiselement 1, ein zweites im Gelenkblock 5, ein drittes im Gelenkblock 11, ein viertes und ein fünftes im Trägerrohr 16' befindet. Die Motor-Getriebe-Einheiten sind mit einem Inkrementalencoder versehen, der für die Positionserfassung vorgesehen ist. Vorteilhaft ist die dabei erforderliche Verdrahtung, von Motor und Encoder, die gemeinsam verlegt werden kann, d.h. es wird nur eine einzige Anschlussstelle pro Motor benötigt. Die Signalauswertung erfolgt direkt durch die zugehörigen Mikrokontroller der elektrischen Antriebsmittel. Bei der gewählten Positionsregelung entfällt ein sog. 'elektrisches Rutschen', wie dies bei Schrittmotoren im Überfastungsfall bekannt ist.

Die Motor-Getriebe-Einheiten werden von elektrischen Antriebsmitteln angesteuert, die aus fünf Mikrokontrollem (auch Motorkontroller genannt) 201, 202, 203, 204 und 205 bestehen, von denen je einer den Motor-Getriebe-Einheiten 101, 102, 103, 104 und 105 zugeordnet ist. Der erste Mikrokontroller 201 befindet sich im Befestigungselement 2, die weiteren vier Mikrokontroller 202, 203, 204 und 205 alle im Trägerrohr 9.
Die Mikrokontroller sind mit jeder Motor-Getriebe-Einheit verbunden (nicht dargestellt) und dienen deren Antrieb und Regelung. Ebenfalls im Befestigungselement 2 befindet sich das Mainboard, auf dem die Verbindungen der Mikrokontroller zusammengeführt werden und auf dem die Verwaltung der äusseren Schnittstelle erfolgt. Die gesamte Leistungselektronik befindet sich auf dem Mainboard und ist vollständig im Roboter integriert, was sich als besonders vorteilhaft erweist.
Ein digitales Bus-System verbindet die elektrischen Antriebsmittel und die Arbeitsmittel 30 mit der äusseren Schnittstelle 26. Damit entfallen empfindliche Analogsignale, wie z.B. gegenüber Magnetfeldern, über lange Strecken. Es resultiert ein störungsfreier Betrieb und damit eine höhere Genauigkeit der Bewegungen. Im weiteren vorteilhaft ist die Möglichkeit einer Erweiterung mit zusätzlichen Kontrollem ohne zusätzliche Leltungen.
Die elektrischen Antriebsmittel können 'In-Circult' programmierbare Flash-Speicher aufweisen, die Firmware-Updates ermöglichen, ohne dass mechanische Eingriffe, resp. ein Austausch von Bauteilen notwendig sind.
Durch die Anordnung der Motor-Getriebe-Einheiten 102 und 103 in den jeweiligen Gelenken liegt der gesamte Antrieb axial in der Gelenkachse, d.h. in der zweiten Achse 7, bzw. der dritten Achse 12. Dadurch entfällt eine Spiel-Übertragung durch andere Gelenke, zudem ergibt dies eine Vereinfachung von Montage und Wartung. Verwendung finden handelsübliche Motor-Getriebe-Einheiten unter Vermeidung von externen, kostspieligen Getrieben.
Zur Lagerung der Gelenke werden Kugel- oder Gleitlager verwendet, da diese eine exakte Führung bei tiefer Reibung erlauben. Dies ist speziell wichtig für die Aufhängung des 4. Freiheitsgrades (Drehung des 'Vorderarms', bzw. des Trägerrohres 16'), damit ein optimaler Druckausgleich bei unsymmetrischer Lastverteilung gewährleistet wird.
Durch die Anordnung der Leistungselektronik innerhalb des Knickarmroboters werden weniger externe Geräte und Kabel benötigt. Die Verkabelung erfolgt intern, wodurch eine mechanische Beeinträchtigung minimiert wird.
Durch die Anordnung der Mikrokontroller möglichst nahe bei den Motor-Getriebe-Einheiten ergeben sich besonders vorteilhaft kurze Kabellängen, von denen die längsten höchstens über ein Gelenk hinwegführen. Im weiteren definiert diese Anordnung gesamthaft eine interne Rechnerleistung, die lokal bei den mechanischen Antriebsmitteln und den Arbeitsmitteln 30 verteilt vorliegt und dadurch eine lokale Intelligenz bildet.
Da jeder Motor-Getriebe-Einheit ein Mikrokontroller für Antrieb und Regelung zugeordnet ist, unterscheidet sich dieser Lösungsansatz von üblichen Robotern, bei denen vielfach von einem externen gemeinsamen Reglerdie gesamten Bewegungen bewerkstelligt werden. Die Vorteile der vorliegenden Lösung sind die Unabhängigkeit der Software verschiedener Motorachsen, was eine höhere Funktionssicherheit bietet, die geringere erforderliche Rechnerleistung pro Chip, bzw. pro Mikrokontroller und weniger Peripherieanschlüsse. Dies führt zu sog. 'LowCost-Mikrokontrollern'.
Da die Positionsregelung pro Achse lokal erfolgt, ergeben sich sehr kurze Reaktionszeiten im Gegensatz zu einer Regelung durch einen zentralen Rechner über einen digitalen Bus. Die Regelparameter sind online durch übergeordnete Steuereinheiten (Mainboard, externer Rechner) änderbar.

Die Auslegung der mechanischen Komponenten, insbesondere der Gelenkblöcke 5 und 11, aber auch das Basiselement 1 und die Arbeitsmittel 30 mit abgerundeten Kanten stellen eine geringe Verletzungsgefahr sicher.

Es ist auch ein Knickarmroboter mit lediglich vier Motor-Getriebe-Einheiten und Mikrokontrollern denkbar, je nach gewünschter Anwendung.

Der Knickarmroboter wird mit Niedrigstspannung betrieben und weist einen sehr geringen Energieverbrauch auf. Die maximale Leistungsaufnahme liegt bei 30 Watt. Aufgrund der limitiert auftretenden Kräfte müssen keine besonderen Sicherheitsvorschriften eingehalten werden. Auf jede Art Schutzgitter, wie sie bei gängigen Industrierobotern üblich sind, kann verzichtet werden. Dadurch wird der Einsatz auf einem viel kleineren Raum möglich, wo Menschen direkten Zugang haben.

Bei einer plötzlich einwirkenden Kraft auf die Trägerrohre oder die Arbeitsmittel, z.B. einen Greifer, muss eine definierte Stelle der Konstruktion nachgeben können, wie dies sinngemäss bei einer Sollbruchstelle der Fall ist. Diese Stelle liegt beim Übergang zur Aluminiumkonstruktion. Die Befestigungsschrauben, die die Motorachse mit der Aluminiumkonstruktion verbinden, geben einem zu grossen Druck nach und sind nach einer übermässigen Krafteinwirkung von aussen schnell ersetzbar.

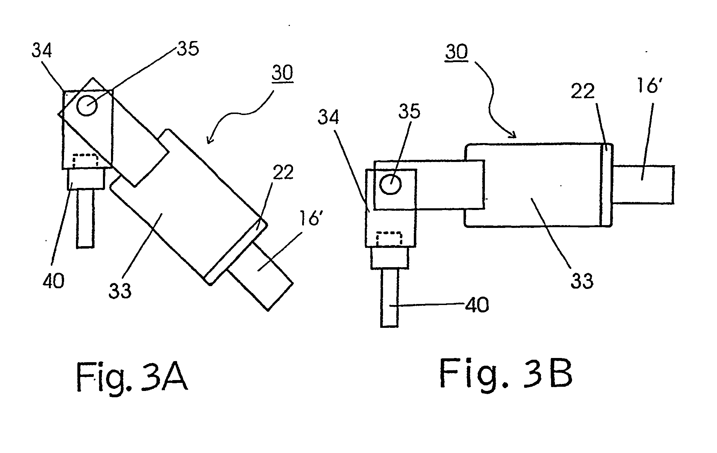

Fig. 3A und 3B zeigen einen Greiferarm mit einem daran drehbar-gelagerten Passiv-Gelenk als Arbeitsmittel. Am Flansch 22 des Trägerrohres 16' sind die Arbeitsmittel 30 angebracht, die aus einem Greiferarm 33 und einem Passiv-Gelenk 34 bestehen. Das Passiv-Gelenk, als Greifbacken ausgebildet, ist an der Stelle 35 drehbar gelagert und ist unter Ausnutzung der Schwerkraft ein Hebegut 40, z.B. ein Metallobjekt, immer vertikal zu halten. Damit ergibt sich ein verminderter Rechenaufwand und eine vereinfachte Konstruktion gegenüber einer Lösung mit einem aktiven Gelenk oder einer Parallelogramm-Führung.

Der erfindungsgemässe Knickarmroboter erlaubt wegen seiner Kleinheit, bzw. wegen der kompakten Bauweise das Arbeiten auf engem Raum. So weist er in Ruhestellung maximal Masse von 10,5 cm x 33 cm x 33 cm auf bei einem Wirkungsradius von ca. 0,5 m. Die Ruhestellung bedeutet die Stellung mit den Drehwinkeln α(2) = 150° und α(3) = 0°. Damit wird er auch einfach transportierbar.
Eine derartige Bauweise ergibt ein Eigengewicht von weniger als 5,0 kg, vorzugsweise weniger als 3,0 kg. Beim Eigengewicht sind die Mittel zur Stromversorgung und die Mittel externer Rechnerleistung nicht berücksichtigt. Trotz der Kleinheit hat sich gezeigt, dass das Verhältnis des Eigengewichtes zur Nutzlast etwa gleich 5,0 beträgt, was sehr vorteilhaft ist; dies bei einem Eigengewicht von 2,5 kg und einer Nutzlast von 0,5 kg. Dieses Verhältnis liegt bei sämtlichen bekannten Knickarmrobotern wesentlich ungünstiger.
Er ist vorzüglich geeignet für die interaktive Arbeit mit menschlicher Arbeitskraft und erlaubt ein sogenanntes 'Hand in Hand'-Arbeiten.
Dank modularem Aufbau kann z.B. der Arbeitsbereich durch ein Teleskopstück an Stelle des Trägerrohres 16' in einfacher Weise erweitert werden, wobei die kompakte Bauweise erhalten bleibt.

Als Ausführungsbeispiel wird ein Knickarmroboter gemäss Fig. 1 und 2 beschrieben. Das Arbeitsmittel entspricht einem Greifer mit zwei Fingern und daran angebrachten drehbar-gelagerten Passivgelenken gemäss Fig. 3A-3B.
Als Antriebselemente, d.h. Motor-Getriebe-Einheiten, werden für alle Gelenke Maxon DC-Motoren und Planetengetriebe verwendet. Z.B. für die erste Motor-Getriebe-Einheit: Typ Maxon RE 15 DC 1.6 Watt, Aussendurchmesser 15 mm, Drehmoment 0,5 Nm, Planetengetriebe 455 : 1. Encoder RE 16 Auflösung von 0.05 Grad.
Als lokale Prozessoren für Master und Slave-Boards werden PICs (Microchip Embedded Control Solutions Company) eingesetzt. Die Verbindung zwischen den Boards bzw. Sensoren und Aktuatoren erfolgt teils mit Flachbandkabeln und teils mit Flexiprints. Zur Spielreduktion sind Spiralfedem eingebaut.
Der Knickarmroboter wird bevorzugt auf einer stationären Unterlage betrieben.

## Patentansprüche

1. Knickarmroboter umfassend ein Basiselement (1), mindestens zwei Gelenkblöcke (5, 11), mindestens drei Trägerrohre (9, 16, 16'), Arbeitsmittel (30), mechanische und elektrische Antriebsmittel und Mittel der Stromversorgung (28), wobei die mechanischen Antriebsmittel aus mindestens vier Motor-Getriebe-Einheiten (101, 102, 103, 104, 105) bestehen, die sich im Basiselement (1), in den Gelenkblöcken (5, 11) und in den Trägerrohren (16, 16') befinden, dass die elektrischen Antriebsmittel aus mindestens vier Mikrokontrollem (201, 202, 203, 204, 205) bestehen, die sich im Basiselement (1) und im Trägerrohr (9) befinden, wobei jeder Motor-Getriebe-Einheit ein Mikrokontroller für deren Antrieb und Regelung zugeordnet, mit dieser verbunden und nahe dieser angeordnet ist, dass ein digitales Bus-System (150) die elektrischen Antriebsmittel und die Arbeitsmittel (30) mit einer äusseren, im Basiselement (1) befindlichen Schnittstelle (26) verbindet, dass die Schnittstelle (26) über ein Verbindungskabel (27) mit den Mitteln der Stromversorgung (28) und über ein zweites Verbindungskabel (31) mit den Mitteln externer Rechnerleistung (32) verbunden ist, dass die mechanischen Antriebsmittel für die Bewegungen der Gelenkblöcke (5, 11), der Trägerrohre (9, 16, 16') und der Arbeitsmittel (30) vorgesehen sind und dass die gesamte Leistungselektronik integriert ist, **dadurch gekennzeichnet,**
**dass** durch die Anordnung der Mikrokontroller (201, 202, 203, 204, 205) eine interne Rechnerleistung gegeben ist, die lokal bei den mechanischen Antriebsmitteln und den Arbeitsmitteln (30) verteilt vorliegt und dadurch eine lokale Intelligenz bildet, dass eine externe Intelligenz in den Mitteln externer Rechnerleistung (32) verfügbar ist und dass beim Übergang von der Motorenachse der elektrischen Antriebsmittel zur Aluminiumkonstruktion mittels Befestigungsschrauben pro Drehachse eine Schutzstelle vorliegt, die Schutz vor übermässiger Krafteinwirkung gewährt.

2. Knickarmroboter nach Anspruch 1, **dadurch gekennzeichnet, dass** die Befestigungsschrauben einem zu grossen Druck nachgeben und nach einer übermässigen Krafteinwirkung von aussen schnell ersetzbar sind.

3. Knickarmroboter nach Anspruch 1 oder 2, **dadurch gekennzeichnet, dass** er eine maximale Leistungsaufnahme von 30 Watt aufweist und dass er auf Grund der limitiert auftretenden Kräfte in einem Raum einsetzbar ist, wo Menschen direkten Zugang haben.

4. Knickarmroboter nach einem der Ansprüche 1 - 3, **dadurch gekennzeichnet, dass** die Arbeitsmittel (30) als Sensoren IR-Sensoren, lokale Kraftsensoren, Leitfähigkeitssensoren, Dehnungssensoren, Ultraschallsensoren und/oder Laser aufweisen.

5. Knickarmroboter nach Anspruch 4, **dadurch gekennzeichnet, dass** Sensoren verschiedener Modalität vorliegen, die eine Sensor-Redundanz bilden, die die Lernfähigkeit erhöht.

6. Knickarmroboter nach einem der Ansprüche 1 - 5, **dadurch gekennzeichnet, dass** für die Bewegungen der Gelenkblöcke (5, 11), der Trägerrohre (9, 16, 16') und der Arbeitsmittel (30) adaptive Regelungen und Vorsteuerungsparameter vorgesehen sind, wobei für deren Betrieb, bzw. deren Berechnung die Mittel externer Rechnerleistung (32) verfügbar sind und mittels Algorithmen der künstlichen Intelligenz die Lernfähigkeit gegeben ist.

## Claims

1. Buckling arm robot, comprising a base element (1), at least two articulated blocks (5, 11), at least three supporting tubes (9, 16, 16'), working means (30), mechanical and electrical drive means and power supply means (28), the mechanical drive means consisting of at least four motor/gearbox units (101, 102, 103, 104, 105) which are located in the base element (1), in the articulated blocks (5, 11) and in the support tubes (16, 16'), the electrical drive means consisting of at least four microcontrollers (201, 202, 203, 204, 205) located in the base element (1) and in the support tube (9), each motor/gearbox unit being allocated a microcontroller for its drive and control and connected with and arranged near said unit, a digital bus system (150) connecting the electrical drive means and the working means (30) with an external interface (26) which is located in the base element (1), the interface (26) being connected with the power supply means (28) via a connecting cable (27) and with the external processor capacity means (32) via a second connecting cable (31), the mechanical drive means having been designed to provide the movements of the articulated blocks (5, 11), the supporting tubes (9, 16, 16') and the working means (30), and the entire power electronics having been integrated, wherein by virtue of the arrangement of the microcontrollers (201, 202, 203, 204, 205) an internal processor capacity is available which is present distributed locally in the mechanical drive means and the working means (30) thereby forming a local intelligence, wherein an external intelligence in the external processor capacity means (32) is available, and wherein on the transition from the motor axle of the electrical drive means to the aluminum construction by means of fastening screws there is a protection point per rotational axle which affords protection against the attack of excessive force.

2. Buckling arm robot as claimed in claim 1, wherein the fastening screws yield to a high pressure and after an excessive attack of force are quickly replaceable from outside.

3. Buckling arm robot as claimed in of claims 1 or 2, wherein said robot has a maximum power input of 30 watts and wherein on the basis of the forces which occur in a limited magnitude can be used in a space to which persons have direct access.

4. Buckling arm robot as claimed in any one of claims 1 - 3, wherein the working means (30) are furnished with IR sensors, local force sensors, conductivity sensors, expansion sensors, ultrasonic sensors and/or lasers.

5. Buckling arm robot as claimed in claim 4, wherein sensors of various modalities are installed which form a sensor redundancy that increase the learning ability.

6. Buckling arm robot as claimed in any one of claims 1 - 5, wherein for the movement of the articulated blocks (5, 11) the support tubes (9, 16, 16') and the working means (30) adaptive controls and pilot control parameters are available, for the operation or the calculation of which the external processor capability means (32) are available and by means of algorithms of artifical intelligence the learning ability is given.

## Revendications

1. Robot à bras articulé comprenant un élément de base (1), au moins deux blocs d'articulation (5, 11), au moins trois tubes de support (9, 16, 16'), des équipements de travail (30), des moyens d'entraînement mécaniques et électriques et des moyens d'alimentation (28), les moyens d'entraînement mécaniques étant constitués d'au moins quatre ensembles moteur/tête (101, 102, 103, 104, 105) qui se trouvent dans l'élément de base (1), dans les blocs d'articulation (5, 11) et dans les tubes de support (16, 16'), que les moyens d'entraînement électriques sont composés de quatre micro-contrôleurs (201, 202, 203, 204, 205) qui se trouvent dans l'élément de base (1) et dans le tube de support (9), chaque ensemble moteur/tête étant équipé d'un micro-contrôleur utilisé pour la commande et le réglage, relié à chaque ensemble et disposé à proximité, qu'un système bus (150) connecte les moyens d'entraînement électriques et les équipements de travail (30) à une interface (26) extérieure située dans l'élément de base (1), que l'interface (26) est connectée par un câble de connexion (27) aux moyens d'alimentation (28) et par un second câble de connexion (31) aux moyens d'un système informatique externe (32), que les moyens d'entraînement mécaniques sont prévus pour les mouvements des blocs d'alimentation (5, 11), des tubes de support (9, 16, 16') et des équipements de travail (30) et que toute l'électronique du système est intégrée,
**caractérisé en ce que**
la disposition des micro-contrôleurs (201, 202, 203, 204, 205) implique la présence d'un système informatique interne, lequel est réparti localement sur les moyens d'entraînement mécaniques et les équipements de travail (30) et assure ainsi une intelligence locale, que les moyens de puissance informatique externe (32) disposent d'une intelligence externe et qu'il y a au passage de l'axe du moteur des moyens d'entraînement électriques à la construction en aluminium pour chaque axe de rotation une protection, fixée au moyen de vis, qui protège contre toute force excessive.

2. Robot à bras articulé selon la revendication 1, **caractérisé en ce que** les vis de fixation cèdent à une pression trop importante et qu'elles peuvent rapidement être remplacées de l'extérieur après une force excessive.

3. Robot à bras articulé selon la revendication 1 ou 2, **caractérisé en ce qu'**il présente une puissance absorbée maximale de 30 watts et que, du fait de la présence limitée de forces, il peut être utilisé dans un local directement accessible.

4. Robot à bras articulé selon les revendications 1 à 3, **caractérisé en ce que** les équipements de travail (30) présentent comme capteurs des capteurs IR, des capteurs de forces locaux, des capteurs de conductibilité, des capteurs d'allongement, des capteurs à ultrasons et/ou des lasers.

5. Robot à bras articulé selon la revendication 4, **caractérisé en ce qu'**il présente des capteurs de différente nature qui apportent une redondance de capteurs augmentant la capacité d'apprentissage.

6. Robot à bras articulé selon les revendications 1 à 5, **caractérisé en ce que** les mouvements des blocs d'articulation (5, 11), des tubes de support (9, 16, 16') et des équipements de travail (30) nécessitent des réglages d'adaptation et des paramètres de commande, leur fonctionnement ou calcul pouvant s'effectuer sur la base des moyens du système informatique externe (32) et la capacité d'apprentissage étant calculée au moyen d'algorithmes de l'intelligence artificielle.
